# EUROPEAN PATENT SPECIFICATION

(11) **EP 2 168 186 B1**
(45) Date of publication and mention of the grant of the patent: **22.08.2018**
(21) Application number: 08848349.0
(22) Date of filing: 30.10.2008
(51) Int. Cl.: C22C 11/06, C22F 1/12, H01M 4/38, H01M 4/68, H01M 4/84

(54) **METHOD FOR PRODUCING LEAD-BASE ALLOY GRID FOR LEAD-ACID BATTERY**
VERFAHREN ZUR HERSTELLUNG EINES GITTERS AUS EINER BLEILEGIERUNG FÜR EINEN BLEIAKKUMULATOR
PROCÉDÉ DE FABRICATION D'UNE GRILLE EN ALLIAGE À BASE DE PLOMB ET BATTERIE AU PLOMB-ACIDE

(30) Priority: 05.11.2007 JP 2007287120
(43) Date of publication of application: 31.03.2010
(73) Proprietor: The Furukawa Battery Co., Ltd., Yokohama-shi Kanagawa 240-0006 (JP)
(72) Inventor: FURUKAWA, Jun c/o Iwakijigyosho, The Furukawa Battery Co., LTD, Fukushima 972-8501 (JP); MATSUSHITA, Kazuo c/o Iwakijigyosho, The Furukawa Battery Co., LTD, Fukushima 972-8501 (JP); YOKOYAMA, Tsutomu c/o Iwakijigyosho, The Furukawa Battery Co., LTD, Fukushima 972-8501 (JP)
(74) Representative: Hoffmann Eitle
(86) International application number: PCT/JP2008/070265
(87) International publication number: WO 2009/060926

(56) References cited:
- EP-A1- 1 629 132
- WO-A1-00/60677
- JP-A- 49 106 431
- JP-A- 2000 021 414
- JP-A- 2002 373 661
- JP-A- 2005 044 760
- LAKSHMI C S ET AL: "Structure and properties of lead-calcium-tin alloys for battery grids", JOURNAL OF POWER SOURCES, ELSEVIER SA, CH, vol. 73, no. 1, 18 May 1998 (1998-05-18), pages 23-29, XP004124845, ISSN: 0378-7753, DOI: 10.1016/S0378-7753(98)00018-4

## Description

### Technical Field

The present invention relates to a method for producing a lead-base alloy grid for lead-acid battery, the grid being useful for automotive fuel batteries, VRLA batteries, industrial cycle use batteries, vented batteries and VRLA batteries for standby, cylindrical wound batteries, and the grid having excellent mechanical strength, corrosion resistance, and growth resistance.

### Background Art

Recently, as the increase of automobile trims and the reduction of useless spaces, engine rooms, in which lead-acid batteries for automobiles are placed, become places of a higher temperature environment than before. In addition, lead storage batteries are always in the state of overcharge, so that have shorter life than other lead-acid batteries. Further, Pb-Ca alloy grids introduced with the intention of obviating the necessity of maintenance tend to cause the problem of growth, which is deformation of the anode grid by corrosion or elongation, and thus have shorter life than conventional ones.

These problems such as corrosion and growth can be resolved by decreasing the Ca content in the Pb-Ca alloy substrate, but the decrease of the Ca content results in the decrease of Ca-containing intermetallic compounds such as Pb₃Ca and (Pb, Sn)₃Ca to cause the deterioration of the grid strength and deformation of the grid during pasting of an active material paste.

Then, it was attempted to decrease the Ca content in a Pb-Ca-Sn alloy, for example, from 0.09 wt.-% to 0.06 wt.-%, and then 0.04%, and compensate the loss with Ba or Ag thereby improve the strength. However, sufficient improvement of the mechanical strength was not achieved.
A method for improving the strength of a Pb-Ca-Sn alloy through natural aging is disclosed in R. D. Prengaman, J. Power Sources 95 (2001) 226. It is shown that an alloy containing 0.065wt.-% of Ca requires aging treatment for 24 hours, and an alloy containing 0.045 wt.-% of Ca requires aging treatment for 14 days, and an alloy containing 0.025 wt.-% of Ca requires aging treatment for 60 days to achieve intended hardness. However, the method requires too much time for natural aging of an alloy containing lower Ca, and is thus insufficient to be practical.

Jpn. PCT National Publication No. 2004-527066 discloses a method for subjecting a Pb-Ca-Sn-Ag alloy containing 0.02-0.06 wt.-% of Ca to artificial aging at 100°C for 3 hours. WO03/088385A1 discloses a method for subjecting a Pb-Ca-Sn-Ba-Ag alloy containing 0.02-0.05 wt.-% of Ca to heat treatment at a temperature of 80-150°C for a period of 0.5-10 hours within 1000 hours after casting the grid. However, these methods involve a wide range of mechanical variation, and the artificial aging may be ineffective. Therefore, these methods have problems with stability of plant operation.

In order to improve the mechanical strength of a Pb-Ca-Sn alloy grid containing a decreased amount of Ca, the inventors performed the differential scanning calorimetry of a Pb-Ca-Sn alloy, and made a minute investigation of the result. As a result of this, a broad region over a wide range was found in a temperature range lower than the range for known peaks, the region is likely attributable to the heat generation process. The region is due to the deposition reaction of the precursor to be the deposit nuclear, and the deposit is considered to grow from the precursor as the nuclear.

On the basis of the estimation, the inventors conducted predetermined natural aging treatment thereby promoting the precursor formation, and then conducted heat treatment to grow the deposit. As a result of this, the resultant Pb-Ca-Sn alloy grid containing lower Ca exhibited improved mechanical strength. The precursor herein is considered to be equivalent to the GP zone or intermediated phase deposit in an aluminum alloy. However, there is no report evidently showing the presence of the precursor in a lead alloy. Heretofore, artificial aging such as heat treatment is regarded as accelerated natural aging for slowly depositing intermetallic compounds such as Pb₃Ca and Sn₃Ca from oversaturated solid solution by cooling after casting.

### Disclosure of Invention

The present invention is intended to provide a lead-base alloy grid for lead-acid battery with excellent mechanical strength, corrosion resistance, and growth resistance.
Thus, the present invention provides a method for producing a lead-base alloy grid for lead-acid battery comprising
(i) subjecting a Pb-Ca-Sn alloy grid which comprises
   0.02 to < 0.05 wt.-% Ca,
   0.4 to 2.5 wt.-% Sn,
   0.005 to 0.04 wt.-% Al, and
   0.002 to 0.014 wt.-% Ba;
   and further optionally comprises at least one of
   0.005 to 0.070 wt.-% Ag,
   0.01 to 0.10 wt.-% Bi, and
   0.001 to 0.05 wt.-% Tl;
   and the remainder being Pb and unavoidable impurities, to natural aging for 2-750 hours; and
(ii) then heat treating the Pb-Ca-Sn alloy grid at a temperature of 90-140°C for a period of 0.5-10 hours.

According to the present invention, the Pb-Ca-Sn lead-base alloy grid is subjected to natural aging with heat treatment thereby forming a precursor to be the deposit nuclear, and the precursor is grown into a deposit by the subsequent heat treatment. Accordingly, the deposition finely and quickly proceeds, and the resultant grid has a high strength in spite of the Ca content that is as low as < 0.05 wt.-%, and deformation during pasting of an active material is prevented. In addition, the Ca content in the Pb-Ca-Sn alloy used in the present invention is so low that the alloy has excellent corrosion resistance and growth resistance.

### Best Mode for Carrying Out the Invention

The present invention relates to a method for producing a lead-base alloy grid for lead storage battery comprising
(i) subjecting a Pb-Ca-Sn alloy grid which comprises
   0.02 to < 0.05 wt.-% Ca,
   0.4 to 2.5 wt.-% Sn,
   0.005 to 0.04 wt.-% Al, and
   0.002 to 0.014 wt.-% Ba;
   and further optionally comprises at least one of
   0.005 to 0.070 wt.-% Ag,
   0.01 to 0.10 wt.-% Bi, and
   0.001 to 0.05 wt.-% Tl;
   and the remainder being Pb and unavoidable impurities, to natural aging for 2-750 hours; and
(ii) then heat treating the Pb-Ca-Sn alloy grid at a temperature of 90-140°C for a period of 0.5-10 hours.

In the present invention, the reason that the Ca content in the Pb-Ca-Sn lead-base alloy is defined as < 0.05 wt.-% is that corrosion resistance and growth resistance of the substrate are insufficient if the Ca content exceeds 0.06 wt.-%, and therefore the Ca content is < 0.05 wt.-%.

In the present invention, the reason that the period of natural aging before heat treatment is defined as 2-750 hours is that precursor formation is insufficient if the period is shorter than 2 hours, and the effect of natural aging treatment is saturated and corrosion of the alloy increases if the period is longer than 750 hours. The behavior of the precursor formation is substantiated by the result of the differential scanning calorimetry. Further, in the present invention, the reason that the heat treatment temperature is defined as 90-140°C is that the growth of the deposit is slow at temperatures < 90°C, and the deposit excessively grows at temperatures > 140°C. In both cases, sufficient mechanical strength cannot be achieved. If the heat treatment time is < 0.5 hours, the growth of the deposit is insufficient, and if > 10 hours, the deposit excessively grows. In both cases, sufficient mechanical strength cannot be achieved. Accordingly, the heat treatment time is 0.5-10 hours.

In the present invention, the effect of natural aging and heat treatment on strength improvement is particularly good for a lead-base alloy containing 0.02 to < 0.05 wt.-% of calcium, 0.4-2.5 wt.-% of tin, 0.005-0.04 wt.-% of aluminum, and 0.002-0.014 wt.-% of barium, the remainder being composed of lead and unavoidable impurities.

In the lead-base alloy of the present invention, Ca enhances the mechanical strength of the alloy. If the Ca content is < 0.02 wt.-%, the effect is insufficient, and if ≥ 0.05 wt.-%, corrosion resistance is impaired. In the alloy of the present invention, the Ca content is preferably 0.03-0.045 wt.-%.

In the alloy of the present invention, Sn improves the flow of molten alloy and mechanical strength of the lead-base alloy. If Sn oozed out of the grid-active material interface is doped by the corrosion layer, the electrical conductivity of the grid-active material interface is improved by the semiconductor effect. If the Sn content is < 0.4 wt.-%, the effect is insufficient and corrosion resistance deteriorates. If the Sn content is > 2.5 wt.-%, the crystal grain of the lead-base alloy coarsen, which may result in corrosion of grain boundaries beyond apparent corrosion. The Sn content is preferably 0.6-2.5 wt.-%.
Al suppresses the loss of Ca and Ba caused by oxidation of molten metal. If the Al content is < 0.005 wt.-%, the effect is insufficient, and if > 0.04 wt.-%, Al tends to deposit as dross to deteriorate the flow of molten alloy.

Ba improves the mechanical strength and corrosion resistance of the lead-base alloy. If the Ba content is < 0.002 wt.-%, the effect is insufficient, and if > 0.014 wt.-%, the corrosion resistance rapidly deteriorates. The Ba content is preferably 0.002-0.010 wt.-%.

When the lead-base alloy contains at least one selected from the group consisting of Ag, Bi, and Tl in an appropriate amount, the alloy has improved mechanical strength or creep properties (growth resistance) at high temperatures. Ag markedly improves mechanical strength, in particular high temperature creep properties. If the Ag content is < 0.005 wt.-%, the effect is insufficient, and if > 0.070 wt.-%, cracking may occur during casting.
The Ag content is more preferably 0.01-0.05 wt.-%. Bi contributes to the improvement of mechanical strength. The effect is lower than that of Ag, but Bi is economical because it is less expensive than Ag. If the Bi content is < 0.01 wt.-%, the effect is insufficient, and if > 0.10 wt.-%, corrosion resistance deteriorates. The Bi content is more preferably 0.03-0.05 wt.-%. Tl contributes to the improvement of mechanical strength. Tl is inexpensive and thus economical.
If the Tl content is < 0.001 wt.-%, the effect is insufficient, and if > 0.050 wt.-%, corrosion resistance deteriorates. The Tl content is more preferably from 0.005-0.050 wt.-%.

In the present invention, the lead-base alloy grid is preferably made by gravity casting, continuous casting, die casting, or rolling. Any of these processes produces a lead-base alloy grid having excellent mechanical strength, corrosion resistance, and growth resistance. The lead-base alloy of the present invention exhibits the same effect when it is used for lead components other than grids.

### Example 1

Each of the molten metals of the lead-base alloys (A)-(F) having the compositions shown in Table 1 (alloys (A) and (C): not according to the invention) was gravity-cast under a book mold system to make strap samples having a length of 200 mm, a width of 15 mm, and a thickness of 1.5 mm, and the samples were subjected to natural aging treatment for 2-750 hours (room temperature retention time after completion of casting to the initiation of heat treatment). Subsequently, the samples were subjected to heat treatment for 0.5-10 hours at temperatures of 90-140°C to produce lead-base alloy grids for lead-acid battery.

Each of the resultant lead-base alloy grids was examined for its mechanical strength, corrosion resistance, and high temperature creep properties. In order to examine mechanical strength, the hardness was measured using a micro Vickers indenter under the conditions of a load of 25 gf and a load retention time of 15 seconds. Those exhibited a hardness of ≥ 12 were evaluated as having excellent mechanical strength.

In order to examine corrosion resistance, the sample was anodized in a dilute sulfuric acid aqueous solution having a specific gravity of 1.280 (20°C) and a temperature of 60°C for 720 hours at a potential of 1350 (mv, Hg/Hg₂SO₄), and then the corrosion weight loss for a unit area of the sample was measured. Those exhibited a corrosion weight loss of ≥ 20 mg/cm² were evaluated as having excellent corrosion resistance (which is indicated by symbol O in Table 2). In order to examine high temperature creep properties, the sample was subjected to a load of 16.5 MPa, then heated to 100°C, and the time until the rupture of the sample was measured. When the time until rupture was ≥ 25 hours, the sample was evaluated as having excellent high temperature creep properties (growth resistance) (which is indicated by symbol 0 in Table 2).

### Comparative Example 1

Lead-base alloy grids for lead-acid battery were made in the same manner as Example 1, except that the conditions of the natural aging treatment were different from those defined in the present invention, and the grids were tested and evaluated in the same manner as Example 1.

### Comparative Example 2

Lead-base alloy grids for lead-acid battery were made in the same manner as Example 1, except that the lead-base alloy G containing 0.07 wt.-% of Ca shown in Table 1 was used, and the grids were tested and evaluated in the same manner as Example 1.

**Table 1**

| Alloy | Ca | Sn | Al | Ba | Ag | Bi | Tl |
|---|---|---|---|---|---|---|---|
| A* | 0.040 | 1.0 | 0.010 | - | - | - | - |
| B | 0.040 | 1.0 | 0.010 | 0.007 | - | - | - |
| C* | 0.060 | 1.0 | 0.010 | - | - | - | - |
| D | 0.040 | 1.0 | 0.010 | 0.007 | 0.02 | - | - |
| E | 0.040 | 1.0 | 0.010 | 0.007 | - | - | - |
| F | 0.040 | 1.0 | 0.010 | 0.007 | - | 0.03 | 0.01 |
| G | 0.070 | 1.0 | 0.010 | - | - | - | - |

| | | | | | | | |
|---|---|---|---|---|---|---|---|
| Note) unit: wt.-% *: reference, not according to the invention | | | | | | | |

**Table 2**

| Example | No. | Alloy* | Natural aging time hr | Heat treatment conditions | Hardness | Corrosion resistance | Growth resistance |
|---|---|---|---|---|---|---|---|
| Example | 1 | A | 2h | 120°C x 3h | 15 | ○ | ○ |
| 1 | 2 | A | 7h | 120°C x 3h | 18 | ○ | ○ |
| | 3 | A | 13h | 120°C x 3h | 18 | ○ | ○ |
| | 4 | A | 48h | 120°C x 3h | 18 | ○ | ○ |
| | 5 | A | 750h | 120°C x 3h | 18 | ○ | ○ |
| | 6 | A | 7h | 90°C x 0.5h | 13 | ○ | ○ |
| | 7 | A | 7h | 140°C x 10h | 14 | ○ | ○ |
| | 8 | B | 2h | 120°C x 3h | 16 | ○ | ○ |
| | 9 | B | 7h | 120°C x 3h | 21 | ○ | ○ |
| | 10 | B | 13h | 120°C x 3h | 21 | ○ | ○ |
| | 11 | B | 48h | 120°C x 3h | 21 | ○ | ○ |
| | 12 | B | 750h | 120°C x 3h | 21 | ○ | ○ |
| | 13 | B | 7h | 90°C x 0.5h | 14 | ○ | ○ |
| | 14 | B | 7h | 140°C x 10h | 15 | ○ | ○ |
| | 15 | C | 2h | 120°C x 3h | 17 | ○ | ○ |
| | 16 | C | 7h | 120°C x 3h | 22 | ○ | ○ |
| | 17 | C | 13h | 120°C x 3h | 22 | ○ | ○ |
| | 18 | C | 48h | 120°C x 3h | 22 | ○ | ○ |
| | 19 | C | 750h | 120°C x 3h | 22 | ○ | ○ |
| | 20 | C | 7h | 90°C x 0.5h | 16 | ○ | ○ |
| | 21 | C | 7h | 140°C x 10h | 16 | ○ | ○ |
| | 22 | D | 2h | 120°C x 3h | 17 | ○ | ○ |
| | 23 | D | 7h | 120°C x 3h | 22 | ○ | ○ |
| | 24 | E | 2h | 120°C x 3h | 18 | ○ | ○ |
| | 25 | E | 7h | 120°C x 3h | 22 | ○ | ○ |
| | 26 | F | 2h | 120°C x 3h | 17 | ○ | ○ |
| | 27 | F | 7h | 120°C x 3h | 23 | ○ | ○ |
| Comp. Ex. 1 | 28 | A | 1h | 120°C x 3h | 9 | ○ | ○ |
| | 29 | B | 1h | 120°C x 3h | 10 | ○ | ○ |
| | 30 | C | 1h | 120°C x 3h | 11 | ○ | ○ |
| | 31 | D | 1h | 120°C x 3h | 11 | ○ | ○ |
| | 32 | E | 1h | 120°C x 3h | 11 | ○ | ○ |
| | 33 | F | 3h | 120°C x 3h | 10 | ○ | ○ |
| Comp. Ex. 2 | 34 | G | 2h | 120°C x 3h | 18 | X | X |
| | 35 | G | 7h | 120°C x 3h | 22 | X | X |
| | 36 | G | 48h | 120°C x 3h | 22 | X | X |

| | | | | | | | |
|---|---|---|---|---|---|---|---|
| *: Alloys (A) and (C): reference not according to the invention | | | | | | | |

As is evident from Table 2, the alloy grids of Nos. 1-27 according to the example of the present invention had hardness of 12 or more, which indicates their excellent mechanical strength. The result is due to that natural aging treatment and heat treatment were conducted under the conditions defined in the present invention, so that the precursor of a Ca-containing deposit successfully occurred and grew to a deposit.

The results shown in Table 2 indicate the effect of Ca (comparison between No. 2 and No. 16), the effect of Ba (comparison between No. 2 and No. 9), and the effects of Ag, Bi, and Tl (comparison between No. 9 and No. 23, 25, and 27) on mechanical strength. It is also shown that the alloy grids of the present invention have excellent corrosion resistance and creep properties. Although not shown in Table 2, corrosion resistance deteriorated when natural aging treatment time was 1000 hours, and the corrosion weight loss was ≥ 20 mg/cm² in the above-described corrosion resistance test.

The evaluations of Nos. 1-5, 8-12, and 15-19 shown in Table 2 indicate that hardness increased as the increase of the natural aging time up to 7 hours, but the hardness reached a level of saturation and did not increase thereafter. The similar tendency was observed for the alloys D, E, and F.

On the other hand, Nos. 28-33 of Comparative Example 1 exhibited low mechanical strength (hardness) because the natural aging treatment time was as short as one hour. The reason for this is that the precursor was not sufficiently formed. Nos. 34-36 of Comparative Example 2 had inferior corrosion resistance and high temperature creep properties (growth resistance) because of the high Ca content.

## Claims

1. A method for producing a lead-base alloy grid for lead-acid battery comprising
(i) subjecting a Pb-Ca-Sn alloy grid which comprises
0.02 to < 0.05 wt.-% Ca,
0.4 to 2.5 wt.-% Sn,
0.005 to 0.04 wt.-% Al, and
0.002 to 0.014 wt.-% Ba;
and further optionally comprises at least one of
0.005 to 0.070 wt.-% Ag,
0.01 to 0.10 wt.-% Bi, and
0.001 to 0.05 wt.-% Tl;
and the remainder being Pb and unavoidable impurities, to natural aging for 2-750 hours; and
(ii) then heat treating the Pb-Ca-Sn alloy grid at a temperature of 90-140°C for a period of 0.5-10 hours.

2. The method of claim 1, wherein the Pb-Ca-Sn alloy comprises at least one of
0.005 to 0.070 wt.-% Ag,
0.01 to 0.10 wt.-% Bi, and
0.001 to 0.05 wt.-% Tl.

3. The method of claim 1 or 2, wherein the lead-base alloy grid is made under gravity casting system, die casting system, continuous casting system, or rolling system.

## Patentansprüche

1. Verfahren zur Herstellung eines Blei-basierten Legierungsgitters für eine Blei-Säure-Batterie, umfassend
(i) natürliches Altern für 2-750 Stunden eines Pb-Ca-Sn-Legierungsgitters, umfassend
0,02 bis < 0,05 Gew.-% Ca,
0,4 bis 2,5 Gew.-% Sn,
0,005 bis 0,04 Gew.-% Al und
0,002 bis 0,014 Gew.-% Ba;
und ferner umfassend gegebenenfalls mindestens eines aus
0,005 bis 0,070 Gew.-% Ag,
0,01 bis 0,10 Gew.-% Bi und
0,001 bis 0,05 Gew.-% Tl;
worin der Rest Pb und unvermeidbare Verunreinigungen sind; und
(ii) anschließend Wärmebehandeln des Pb-Ca-Sn-Legierungsgitters bei einer Temperatur von 90-140°C für eine Zeitspanne von 0,5 bis 10 Stunden.

2. Verfahren gemäß Anspruch 1, worin das Pb-Ca-Sn-Legierungsgitter mindestens eines umfasst aus
0,005 bis 0,070 Gew.-% Ag,
0,01 bis 0,10 Gew.-% Bi und
0,001 bis 0,05 Gew.-% Tl.

3. Verfahren gemäß Anspruch 1 oder 2, worin das Bleibasierte Legierungsgitter durch ein Schwerkraftgusssystem, Formgusssystem, kontinuierliches Gusssystem oder Walzsystem hergestellt wird.

## Revendications

1. Procédé de production d'une grille d'alliage à base de plomb pour un accumulateur au plomb-acide consistant à
(i) soumettre une grille d'alliage de Pb-Ca-Sn qui comprend
0,02 à < 0,05 % en masse de Ca,
0,4 à 2,5 % en masse de Sn,
0,005 à 0,04 % en masse d'AI, et
0,002 à 0,014 % en masse de Ba ;
et comprend de plus éventuellement au moins un de
0,005 à 0,070 % en masse d'Ag,
0,01 à 0,10 % en masse de Bi, et
0,001 à 0,05 % en masse de Tl ;
et le reste étant Pb et des impuretés inévitables, à un vieillissement naturel pendant 2-750 heures ; et
(ii) à traiter thermiquement ensuite la grille d'alliage de Pb-Ca-Sn à une température de 90-140°C sur une période de 0,5-10 heures.

2. Procédé selon la revendication 1, dans lequel l'alliage de Pb-Ca-Sn comprend au moins un de
0,005 à 0,070 % en masse d'Ag,
0,01 à 0,10 % en masse de Bi, et
0,001 à 0,05 % en masse de Tl.

3. Procédé selon la revendication 1 ou 2, dans lequel la grille d'alliage à base de plomb est fabriquée sous un système de coulée par gravité, un système de coulée en moule, un système de coulée continue, ou un système de laminage.
